# EUROPÄISCHE PATENTSCHRIFT

(11) **EP 1 767 389 B1**
(45) Veröffentlichungstag und Bekanntmachung des Hinweises auf die Patenterteilung: **11.03.2015**
(21) Anmeldenummer: 06018176.5
(22) Anmeldetag: 31.08.2006
(51) Int. Cl.: B61D 19/00, E05D 15/10, E05F 15/632, E05F 15/655

(54) **Schwenkschiebetür für Fahrzeuge, insbesondere Fahrgasttür für Fahrzeuge des öffentlichen Personnenverkehrs**
pivotable sliding vehicle door , especially for public transport
Porte pivotante-coulissante pour véhicules de transport de personnes

(30) Priorität: 27.09.2005 DE 202005015168 U
(43) Veröffentlichungstag der Anmeldung: 28.03.2007
(73) Patentinhaber: Gebr. Bode GmbH & Co. KG, 34123 Kassel (DE)
(72) Erfinder: Pellegrini, Andreas, 34590 Wabern (DE)
(74) Vertreter: Patentanwälte Bauer Vorberg Kayser

(56) Entgegenhaltungen:
- EP-A- 1 314 626
- EP-A- 1 488 977
- EP-A- 1 527 975

## Beschreibung

Die Erfindung betrifft eine Schwenkschiebetür für Fahrzeuge, insbesondere eine Fahrgasttür für Fahrzeuge des öffentlichen Personennahverkehrs, mit den Merkmalen aus dem Oberbegriff des Patentanspruchs 1.

Derartige Schwenkschiebetüre sind an sich bekannt und beispielsweise in EP 1 527 975 A1 und EP 1314626 beschrieben.

Bei derartigen Schwenkschiebetüren tritt das Problem auf, dass der für die Anordnung und Ausbildung der Antriebsvorrichtung zur Verfügung stehende Raum oft sehr begrenzt ist. Andererseits soll der zur Antriebsvorrichtung gehörende Motor so angeordnet sein, dass von seinem Abtriebselement die Kraft zur Verschiebung der Türblätter in Längsrichtung abgenommen werden kann und außerdem vom drehbar gelagerten Gehäuse des Motors die Reaktionskraft zur Versetzung der Tragführung abgenommen werden kann. Dies stößt je nach den Einbauverhältnissen oft auf große Schwierigkeiten, insbesondere wenn die Längsbewegung der Türblätter über einen Zahnriemen- oder Nockenriemenantrieb erfolgen soll.

Der Erfindung liegt die Aufgabe zugrunde, eine Schwenkschiebetür mit den Merkmalen aus dem Oberbegriff des Patentanspruchs 1 so auszubilden, dass auch unter ungünstigen Verhältnissen des Einbauraums eine Kompaktheit des Antriebs zu erreichen ist, die es dennoch gestattet, Antriebskraft und Reaktionskraft abzunehmen und weiterzuleiten.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, durch Hintereinanderschalten eines Planetengetriebemotors und eines Winkelgetriebes Bedingungen zu schaffen, unter denen es einerseits möglich ist, die Reaktionskraft von dem drehbar gelagerten Gehäuse des Planetengetriebemotors und andererseits über das Winkelgetriebe das Drehmoment für den Antrieb der Längsbewegung der Türblätter, also beispielsweise einen Riemen-Antrieb, abzunehmen. In besonders vorteilhafter Weise kann dabei der Planetengetriebemotor so angeordnet werden, dass die Längsrichtung seines Gehäuses parallel zum Riemen des Riemenantriebs verläuft.

Ein weiterer Vorteil der erfindungsgemäßen Schwenkschiebetür besteht darin, dass durch die Anwendung einerseits eines Planetengetriebes und andererseits eines Winkelgetriebes die Übersetzungsverhältnisse für die Antriebskraft der Längsbewegung der Türblätter und die Reaktionskraft für die Versetzung der Tragführung in sehr flexibler Weise ausgewählt werden können.

Im Folgenden wird anhand der beigefügten Zeichnungen ein Ausführungsbeispiel für eine Schwenkschiebetür nach der Erfindung näher erläutert.

In den Zeichnungen zeigen:
- Fig. 1: eine Schwenkschiebetür in einer Ansicht von außen im geschlossen Zustand;
- Fig. 2: die Schwenkschiebetür nach Fig. 1 in einer Ansicht von innen;
- Fig. 3: die Schwenkschiebetür gemäß Fig. 2 in einer isometrischen Darstellung von innen;
- Fig. 4: in einer gegenüber den Fig. 1 bis 3 vergrößerten Einzeldarstellung den Planetengetriebemotor mit dem daran angeordneten Winkelgetriebe;
- Fig. 5: in einer gegenüber den Fig. 1 bis 3 vergrößerten isometrischen Teildarstellung den Bereich der Antriebsvorrichtung der Schwenkschiebetür aus der Richtung X in Fig. 2.

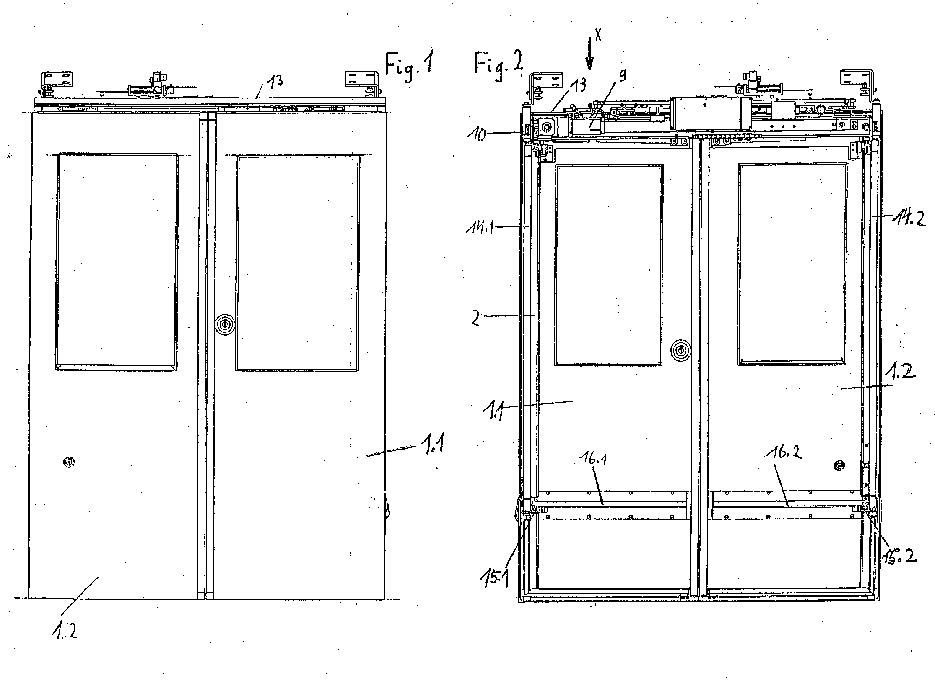

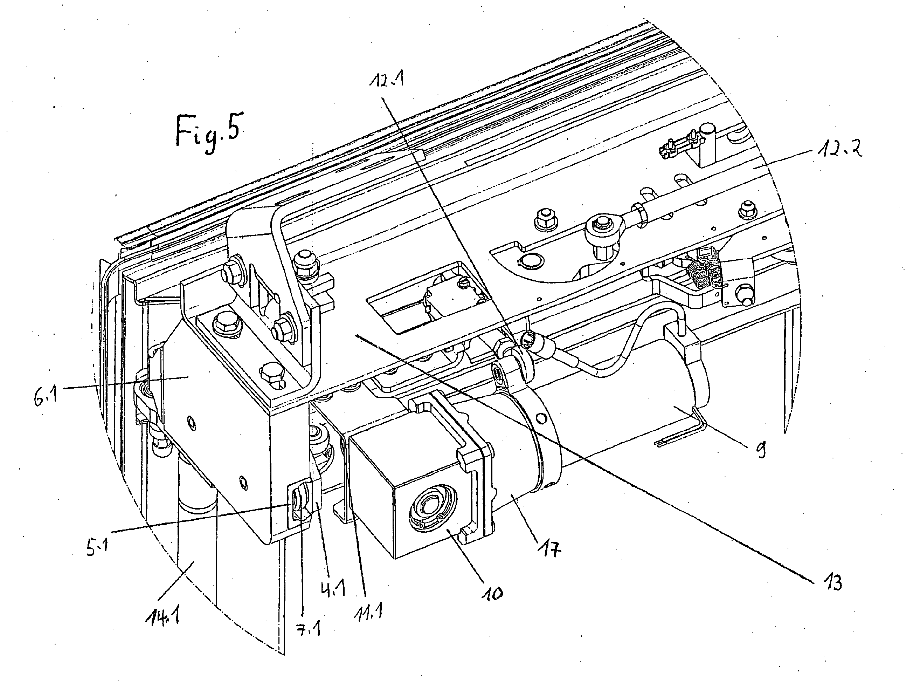

In den Figuren 1 bis 5 sind nur die Teile einer Schwenkschiebetür dargestellt, die im vorliegenden Fall für die Darstellung der Erfindung von Bedeutung sind. Eine ganze Reihe von an sich bekannten Funktionselementen sind aus den Figuren der Zeichnungen nicht erkennbar. Sie können beispielsweise so ausgebildet sein wie in der eingangs erwähnten EP 1 527 975 A1 dargestellt und beschrieben.

In den Zeichnungen ist eine zweiflüglige Schwenkschiebetür dargestellt mit zwei Türblättern 1.1 und 1.2, die mittels drehsteifer Tragarme jeweils mit einer in den Zeichnungen nicht sichtbaren Führungseinheit verbunden sind, die in einer Tragführung aufgehängt ist, die im oberen Bereich des Türportals 2 angeordnet ist. Die Tragführung ist an ihren beiden Enden jeweils mit einem Rahmenteil 4.1 und 4.2 fest verbunden und jedes Rahmenteil ist in mit dem Türportal fest verbundenen Querführungen in einer Richtung horizontal und quer zur Türöffnung verschiebbar geführt. Die Querführungen besitzen mit dem Türportal 2 verbundene Halterungen 6.1 und 6.2, in denen in Querrichtung verlaufende Führungsschienen 5.1 und 5.2 angeordnet sind, in welchen an den Rahmenteilen 4.1 und 4.2 angeordnete Führungsrollen 7.1 und 7.2 laufen.

Die Tragführung besitzt in an sich bekannter und in den Zeichnungen nicht sichtbarer Weise für jedes Türblatt eine sich über einen Teil der Türbreite erstreckende, beispielsweise als Rundstange ausgebildete Führungsschiene, auf welcher jeweils die Führungseinheiten geführt sind. Dabei können die Führungsschienen übereinander angeordnet und die Führungseinheiten derart ausgebildet sein, dass sie ungehindert aneinander vorbeilaufen können. Aufgrund der oben beschriebenen Querführungen ist die Tragführung zusammen mit den Türblättern 1.1 und 1.2 aus einer Geschlossenstellung, in der die Türblätter in der Fahrzeugwand liegen, in eine Verschiebestellung nach außen verschiebbar, in der die Türblätter außen vor der nicht dargestellten Fahrzeugwand liegen.

In dieser Verschiebestellung sind die Türblätter in einander entgegengesetzten Richtungen verschiebbar, bis sie sich in der voll geöffneten Stellung befinden.

Die am Türportal fest angeordneten Halterungen 6.1 und 6.2 für die in Querrichtung verlaufenden Führungsschienen 5.1 und 5.2 sind über eine oberhalb der Tragführung horizontal und parallel zur Tragführung angeordnete Antriebsplatte 13 fest miteinander verbunden.

Als Antriebsvorrichtung sowohl für die Verschiebung der Türblätter als auch für die Bewegung der Tragführung in Querrichtung dient ein Planetengetriebemotor 9. Die Abtriebswelle 9.2 des Planetengetriebemotors 9 ist über ein Winkelgetriebe 10 mit einer Antriebsrolle 11.1 verbunden, die zusammen mit einer Gegenrolle 11.2 und einem Zahn- oder Nockenriemen 11.3 einen Riementrieb bildet. Die Führungseinheiten sind jeweils mit einem Trum dieses Riemens 11.3 derart verbunden, dass ihre Längsbewegung jeweils in einander entgegengesetzten Richtungen erfolgt.

Wie aus den Zeichnungen ersichtlich ist der Planetengetriebemotor 9 so angeordnet, dass die Längsrichtung seines Gehäuses 9.1 parallel zum Riemen 11.3 des Riementriebs verläuft.
Die Kraft für die Verschiebung der Tragführung in Querrichtung wird aus der Reaktionskraft des Planetengetriebemotors abgeleitet. Hierzu ist das Gehäuse 9.1 des Motors um eine zur Abtriebswelle 9.2 fluchtende Drehachse drehbar an der Tragführung gelagert und über ein Koppelelement 12.1 mit den Antriebselementen für die Verschiebung der Tragführung verbunden. Diese Antriebselemente sind in den Zeichnungen nicht erkennbar und können in der Weise ausgebildet sein wie in EP 1 527 975 A1 beschrieben. Das heißt, das Koppelelement 12.1 kann mit einem zweiarmigen Spreizhebel verbunden sein, der sich an einem mit dem Türportal fest verbundenen, im Bereich der Führungsschiene 5.1 angeordneten Stützteil abstützt, so dass die auftretende Reaktionskraft ein Drehmoment ausübt, welches auf die Tragführung eine in Bewegungsrichtung wirkende Kraft zur Erzeugung der Versetzungsbewegung in Querrichtung bewegt. Dieses Drehmoment wird außerdem über eine Koppelstange 12.2 auf einen zweiten Spreizhebel übertragen, der sich an einem im Bereich der anderen Führungsschiene 5.2 angeordneten Stützteil abstützt. Die Längs- und Querbewegung der Türblätter wird durch nicht dargestellte besondere Führungen koordiniert.

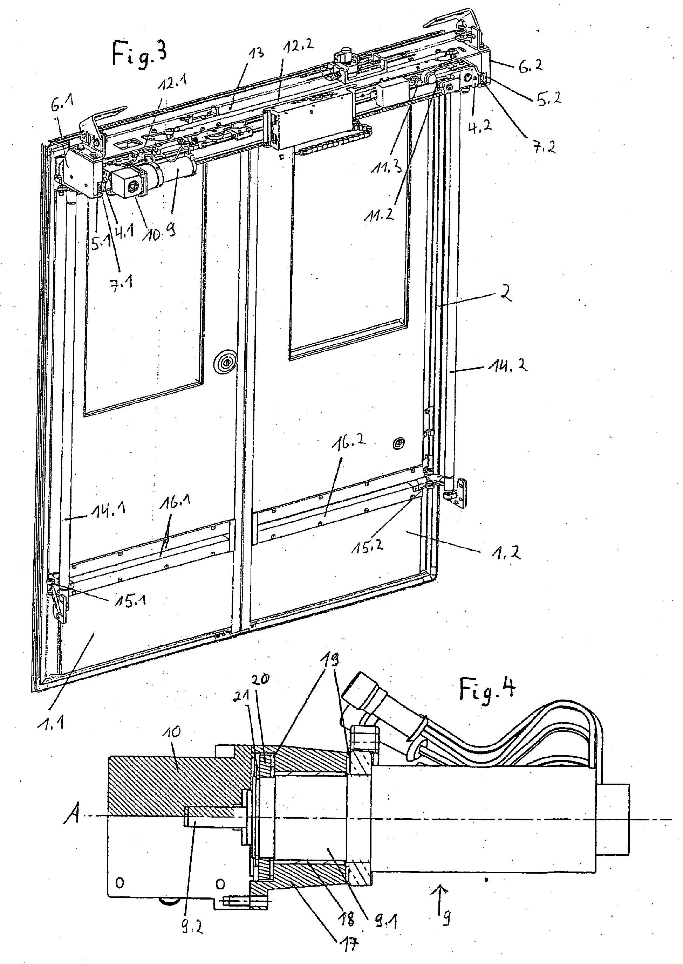

Fig. 4 zeigt detaillierter die Koppelung zwischen dem Planetengetriebemotor 9 und dem Winkelgetriebe 10. Der dem Winkelgetriebe 10 zugewandte Teil des Gehäuses 9.1 des Planetengetriebemotors 9 ist über eine Gleitlagerbuchse 18 in einem Aufnahmeflansch 17 drehbar gelagert, der mit dem Winkelgetriebe 10 fest verbunden ist. Zur axialen Abstützung dienen eine Scheibe 20 sowie Gleitlageranlaufscheiben 19, die durch einen Sicherungsring 21 fixiert sind.
Auf diese Weise ist das Gehäuse 9.1 des Planetengetriebemotors 9 gegenüber dem fest mit der Tragführung verbundenen Winkelgetriebe 10 um die durch die Abtriebswelle 9.2 des Planetengetriebemotors 9 laufende Achse A drehbar. Anstelle der Gleitlagerbuchse 18 kann selbstverständlich auch ein Kugellager oder Wälzlager verwendet werden.

Zur Abstützung der Türblätter 1.1 und 1.2 im unteren Bereich dienen Rollenführungen 15.1 und 15.2. Diese sind mittels Schwenkhebeln jeweils mit einer im Bereich des Türportals 2 vertikal angeordneten Drehsäule 14.1 und 14.2 verbunden. Die Drehsäulen sind ihrerseits an ihrem oberen Ende über Schwenkhebel mit der Tragführung derart verbunden, dass eine Bewegung der Tragführung in Querrichtung eine Drehbewegung der Drehsäule bewirkt. Die Rollenführungen 15.1 und 15.2 laufen bei der Längsbewegung der Türblätter 1.1 und 1.2 in an den Türblättern angeordneten Führungsschienen 16.1 bzw. 16.2.

## Patentansprüche

1. Schwenkschiebetür für Fahrzeuge, insbesondere Fahrgasttür für Fahrzeuge des öffentlichen Personennahverkehrs, mit mindestens einem in seiner Längsrichtung verschiebbaren Türblatt, das in einer Tragführung aufgehängt und verschiebbar geführt ist, welche zusammen mit dem Türblatt aus einer Geschlossenstellung, in der das Türblatt in der Fahrzeugwand liegt, in eine Verschiebestellung, in der das Türblatt außen vor der Fahrzeugwand liegt und zurück versetzbar ist, und mit einer Antriebsvorrichtung für die Verschiebebewegung des Türblatts, aus deren Reaktionskraft eine Kraft für die Versetzung der Tragführung abgeleitet wird, wobei die Tragführung mit einem Rahmenteil fest verbunden ist und jedes Rahmenteil in mit dem Türportal verbundenen Querführungen in einer Richtung horizontal und quer zur Türöffnung bewegbar geführt ist und die Reaktionskraft der Antriebsvorrichtung über Koppelelemente auf Vorrichtungen zur Erzeugung einer auf die Tragführung in Versetzungsrichtung wirkenden Kraft einwirkt zur Erzeugung der Versetzungsbewegung in Querrichtung und bei welcher die Antriebsvorrichtung einen Motor mit Getriebe aufweist, dessen Gehäuse um die Achse der Abtriebswelle drehbar gelagert ist und die Koppelelemente zur Übertragung der Reaktionskraft mit dem Gehäuse des Motors verbunden sind, **dadurch gekennzeichnet, dass** der Motor als Planetengetriebemotor (9) ausgebildet ist, dessen Abtriebswelle (9.2) mit dem Eingangselement eines Winkelgetriebes (10) verbunden ist und das Ausgangselement des Winkelgetriebes (10) mit der Vorrichtung (11.1 - 11.3) zur Verschiebung des Türblatts (1.1, 1.2) gekoppelt ist, während das Gehäuse (9.1) des Planetengetriebemotors (9) um die Achse der Abtriebswelle (9.2) drehbar mit dem fest angeordneten Gehäuse des Winkelgetriebes (10) verbunden ist.

2. Schwenkschiebetür nach Anspruch 1, **dadurch gekennzeichnet, dass** das Gehäuse (9.1) des Planetengetriebemotors (9) über ein Gleitlager (18) mit dem Gehäuse des Winkelgetriebes (10) verbunden ist.

3. Schwenkschiebetür nach Anspruch 1, **dadurch gekennzeichnet, dass** das Gehäuse des Planetengetriebemotors über ein Kugel- oder Wälzlager mit dem Gehäuse des Winkelgetriebes verbunden ist.

4. Schwenkschiebetür nach einem der Ansprüche 1 bis 3, **dadurch gekennzeichnet, dass** die Vorrichtung zur Verschiebung des Türblatts als Riementrieb (11.1 - 11.3) ausgebildet ist und das Ausgangselement des Winkelgetriebes (10) mit der Antriebsrolle (11.1) des Riementriebs verbunden ist.

5. Schwenkschiebetür nach Anspruch 4, **dadurch gekennzeichnet, dass** die Längsrichtung des Gehäuses (9.1) des Planetengetriebemotors (9) parallel zum Riemen (11.3) des Riementriebs verläuft.

## Claims

1. A pivot sliding door for vehicles, in particular a passenger door for public transport vehicles, with at least one door leaf which is displaceable in its longitudinal direction and which is suspended and displaceably guided in a carrier guide which can be shifted together with the door leaf from a closed position, in which the door leaf lies in the vehicle wall, into a displaced position, in which the door leaf lies outside in front of the vehicle wall, and back, and with a driving device for the displacement movement of the door leaf from whose reaction force a force is derived for shifting the carrier guide, wherein the carrier guide is firmly connected to a frame part and each frame part is guided in transverse guides connected to the door portal so as to be movable in a direction horizontal and transverse to the door opening, and the reaction force of the driving device acts via coupling members on devices for generating a force acting on the carrier guide in the shifting direction in order to generate the shifting movement in the transverse direction, and in which the driving device has a motor with a transmission whose housing is mounted rotatably about the output shaft and the coupling members are connected to the housing of the motor for transmitting the reaction force, **characterised in that** the motor is configured as a planetary gear motor (9), the output shaft (9.2) thereof is connected to the input member of an angle transmission (10) and the output member of the angle transmission (10) is coupled to the device (11.1 - 11.3) for displacing the door leaf (1.1, 1.2), while the housing (9.1) of the planetary gear motor (9) is connected to the stationarily disposed housing of the angle transmission (10) so as to be rotatable about the axis of the output shaft (9.2).

2. The pivot sliding door according to claim 1, **characterised in that** the housing (9.1) of the planetary gear motor (9) is connected to the housing of the angle transmission (10) via a plain bearing (18).

3. The pivot sliding door according to claim 1, **characterised in that** the housing of the planetary gear motor is connected to the housing of the angle transmission via a ball or rolling bearing.

4. The pivot sliding door according to any one of the claims 1 to 3, **characterised in that** the device for displacing the door leaf is configured as a belt drive (11.1 - 11.3) and the output member of the angle transmission (10) is connected to the drive roller (11.1) of the belt drive.

5. The pivot sliding door according to claim 4, **characterised in that** the longitudinal direction of the housing (9.1) of the planetary gear motor (9) extends parallel to the belt (11.3) of the belt drive.

## Revendications

1. Porte pivotante-coulissante pour véhicules, en particulier porte de passager pour véhicules des transports publics à courte distance, avec au moins un ouvrant qui est déplaçable dans sa direction longitudinale et qui est suspendu et guidé à coulissement dans un guide de support lequel peut être déplacé conjointement avec ledit ouvrant depuis une position fermée dans laquelle l'ouvrant se situe dans la paroi de véhicule vers une position de déplacement dans laquelle ledit ouvrant est situé à l'extérieur devant ladite paroi de véhicule, et vice versa, et avec un dispositif d'entraînement pour le mouvement de déplacement de l'ouvrant, de la force de réaction duquel est déduite une force pour le déplacement du guide de support, ledit guide de support étant solidarisé à une partie d'encadrement et chaque partie d'encadrement étant guidée de manière déplaçable, dans des guides transversaux reliés au portail de porte, dans une direction horizontale et transversale à la baie de porte, et la force de réaction du dispositif d'entraînement agissant via des éléments de couplage sur des dispositifs de génération d'une force agissant sur ledit guide de support dans la direction de déplacement, pour générer le mouvement de déplacement dans la direction transversale, et dans laquelle le dispositif d'entraînement présente un moteur à engrenage dont le carter est logé à rotation autour de l'axe de l'arbre de sortie et lesdits éléments de couplage sont reliés au carter du moteur pour transmettre la force de réaction, **caractérisée par le fait que** le moteur est réalisé en tant que moteur à engrenage planétaire (9) dont l'arbre de sortie (9.2) est relié à l'élément d'entrée d'un engrenage angulaire (10) et que l'élément de sortie de l'engrenage angulaire (10) est couplé au dispositif (11.1 - 11.3) de déplacement de l'ouvrant (1.1, 1.2), tandis que le carter (9.1) du moteur à engrenage planétaire (9) est relié, de manière à pouvoir tourner autour de l'axe de l'arbre de sortie (9.2), au carter de l'engrenage angulaire (10), qui est disposé fixement.

2. Porte pivotante-coulissante selon la revendication 1, **caractérisée par le fait que** le carter (9.1) du moteur à engrenage planétaire (9) est relié par un palier lisse (18) au carter de l'engrenage angulaire (10).

3. Porte pivotante-coulissante selon la revendication 1, **caractérisée par le fait que** le carter du moteur à engrenage planétaire est relié par un roulement à billes ou un palier à roulement au carter de l'engrenage angulaire.

4. Porte pivotante-coulissante selon l'une quelconque des revendications 1 à 3, **caractérisée par le fait que** le dispositif de déplacement de l'ouvrant est réalisé en tant que commande à courroie (11.1 - 11.3) et que ledit élément de sortie de l'engrenage angulaire (10) est relié au rouleau d'entraînement (11.1) de la commande à courroie.

5. Porte pivotante-coulissante selon la revendication 4, **caractérisée par le fait que** la direction longitudinale du carter (9.1) du moteur à engrenage planétaire (9) s'étend parallèlement à la courroie (11.3) de la commande à courroie.
